Europäisches Patentamt

European Patent Office

Office européen des brevets

(11) Publication number: **0 139 437**
**B1**

## (12) EUROPEAN PATENT SPECIFICATION

(45) Date of publication of patent specification: **13.01.88**

(21) Application number: **84306049.2**

(22) Date of filing: **04.09.84**

(51) Int. Cl.⁴: **B 62 D 55/32, B 21 L 21/00, B 23 Q 7/06, B 25 B 27/22**

(54) Apparatus for displacing a length of track.

(30) Priority: **05.09.83 JP 137514/83 u**

(43) Date of publication of application:
**02.05.85 Bulletin 85/18**

(45) Publication of the grant of the patent:
**13.01.88 Bulletin 88/02**

(84) Designated Contracting States:
**DE FR GB IT**

(56) References cited:
**EP-A-0 026 063**
**US-A-3 028 723**
**US-A-3 564 995**

(73) Proprietor: **Maruma Jyusharyo Kabushiki Kaisha**
**2-19 Sakuragaoka, 1-chome**
**Setagaya-ku Tokyo (JP)**

(72) Inventor: **Moriki, Yasumitsu**
**Maruma Jyusharyo K.K. 2-19 Sakuragaoka 1-chome**
**Setagaya-ku Tokyo (JP)**
Inventor: **Numakura, Hirotomo**
**Maruma Jyusharyo K.K. 2-19, Sakuragaoka 1-chome**
**Setagava-ku Tokyo (JP)**
Inventor: **Fukui, Masayuki**
**Maruma Jyusharyo K.K. 2-19 Sakuragaoka 1-chome**
**Setagava-ku Tokyo (JP)**

(74) Representative: **Rees, David Christopher et al**
**Kilburn & Strode 30 John Street**
**London WC1N 2DD (GB)**

Courier Press, Leamington Spa, England.

EP 0 139 437 B1

## Description

The present invention relates to an apparatus for displacing or incrementally advancing a length of articulated track or chain for example, a track such as a caterpillar track employed on a bulldozer etc. The apparatus may be required to displace the length of track towards track presses for disassembling the track or, after the links have been assembled or reassembled to a line, it may be required to move the track away from track presses step by step.

Displacing a length of track has previously been carried out with a visually adjusted displacement of the track relative to a jaw insert located midway between an opposing pair of track presses. When the track is not properly fitted to jaw insert it is necessary to perform repeated inching operations. Under these conditions, assembling, reassembling and disassembling a length of track is achieved at an unavoidably lower operational efficiency. Another disadvantage of this type of conventional apparatus is that there is a danger of the track presses being operated when pins and bushings are still not correctly located at the predetermined position relative to press jigs for the track presses.

Clearly, the operational efficiency in assembling, reassembling or disassembling a length of track will vary substantially in dependence on the performance of the apparatus for displacing it. Furthermore, in order to assure that an intended operation is performed safely on the track presses it is necessary for the apparatus displacing the length of track to move it accurately towards and away from the presses.

It is therefore an object of the present invention to provide an apparatus for displacing a length of track to a position accurately located relative to track presses.

It is another object of the present invention to provide an apparatus for displacing a length of track in which a distance of displacement can be easily adjusted in dependence upon the type of track to be disassembled, assembled or reassembled, since their configuration and dimensions vary in dependence upon their application.

US—A—3028723 (Kaplan) discloses an apparatus for displacing a line of track chain according to the first part of claim 1; however, the apparatus is complicated and suffers various drawbacks. According to Kaplan, a guide table is pivotally mounted to undergo up and down tilting movement by a fluid motor, and a separate fluid motor is needed to effect up and down movement of a chain engaging pusher rod. A third fluid motor is needed to reciprocate the pusher rod through forward and return strokes. Further, a reciprocable frame is required and on which is mounted the pusher rod. The fluid motor reciprocates the frame along with the pusher rod and the fluid motor, whereas the fluid motor effects reciprocation of the pusher rod. To raise and lower the guide table the separate fluid motor is required. Thus, the apparatus of Kaplan requires three fluid motors and an interconnecting linkage between the framework and the guide table together with fluid circuitry and controls for actuating the three fluid motors.

According to the present invention there is provided apparatus for displacing a length of track or chain by a predetermined distance in its longitudinal direction which comprises a guide table having a slot in its surface extending in the longitudinal direction, the guide table being pivotally connected at its rear end to a stationary frame structure about a substantially horizontal axis so as to allow the guide table to tilt upwards; a pair of parallel rails extending in the longitudinal direction below the guide table, their rear ends being pivotally connected relative to the guide table; a first actuator arranged to swing the rails upwards and downwards; a trolley arranged to run along the rails, the trolley being provided with an engagement rod extending upwards from the trolley through the slot in the guide table to come in engagement with a bushing in a track chain on the guide table, and a second actuator arranged to move the trolley along the rails characterised in that the trolley includes an abutment member extending beneath the trolley and being arranged to abut against either of two stops which are adjustably mounted on a displacement setting member extending below the rails, the extent of movement of the trolley being determined by the positions of the stops whereby the position at which displacement of the track is initiated and the distance of displacement may be preset as required by adjusting the positions of the stops on the setting member and further characterised in that the upward tilting movement of the guide table is achieved by the action of the first actuator on the rails.

Preferably, the setting member is on a threaded spindle, stationary with respect to the rails, on which the stops are mounted by way of correspondingly tapped holes.

In a more preferred embodiment of the invention each stop comprises a pair of nuts with an elastic member located between them. The elastic member may be made of rubber or the like material and is preferably in the form of an O-ring.

Further, each of the rails for guiding movement of the trolley may have a U-shaped section and the trolley preferably carries rollers which are located in the U-shaped sections.

Preferably, the actuators comprise pneumatically or hydraulically operated cylinders. The top end of the first actuator is preferably pivotally connected to the rails, while its bottom end is preferably pivotally connected to the frame structure. The foremost end of the second actuator is preferably operatively connected to the trolley, while its rearmost end is connected to the rails.

The invention may be carried into practice in various ways and one embodiment will now be described by way of example with reference to the accompanying drawings, in which:—

Figure 1 is a plan view of apparatus in accordance with the invention for assembling, reassembling or disassembling a length of track or chain;

Figure 2 is a plan view of a portion of the apparatus of Figure 1 to an enlarged scale;

Figure 3 is a side view partially in section of the apparatus of Figure 2;

Figure 4 is a side view similar to Figure 3 showing the apparatus in a different orientation; and

Figure 5 is a partial, enlarged sectional side view showing a length of track on the apparatus.

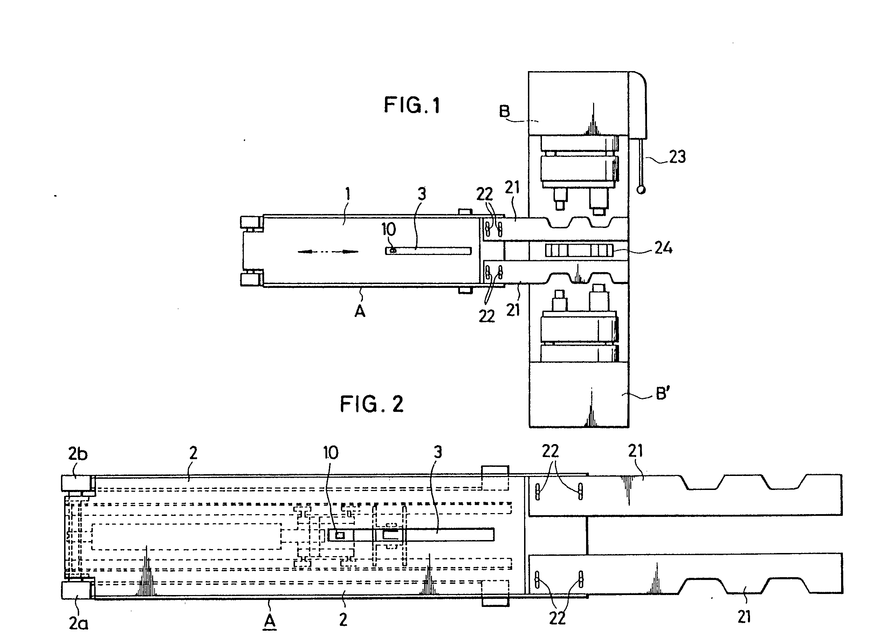

As shown in Figure 1 a system for disassembling, assembling and/or reassembling a length of track or chain comprising an apparatus A for displacing the track and an opposed pair of track presses B, are located on each side of the apparatus A at one end. The structure of the apparatus A is shown in more detail in Figures 2 to 4.

A line of track to be disassembled is placed on a guide table 1. The guide table 1 is supported in a horizontal orientation on a frame 2 constructed of channel or box section steel material in such a way that it tilts only in the upward direction about a shaft 5 which extends through brackets 4 at its rear end. The brackets 4 are fixedly secured to the bottom surface of the guide table 1 and the shaft 5 is rotatable supported by an opposing pair of columns 2a and 2b forming part of the frame 2.

A longitudinal slot 3 is formed in the guide table 1. A pair of U-sectioned rails 6 are pivotally connected to the shaft 5 at their rear ends. A trolley 8, runs along the rails 6 by means of four rollers 9 which are mounted on the trolley 8 and located in the U-shaped grooves of the rails 6. The trolley 8 is operatively connected to an actuating cylinder 12. The bottom end part of the cylinder 12 is pivotally fitted to a pivot pin 7, which is also engaged by the rearmost end part of each of the rails 6, while the foremost end part of the cylinder rod is connected to the trolley 8 by way of a pin 13.

An engagement rod 10 extends upwards from the trolley 8 through the slot 3 to a position where it comes into engagement with a bushing forming part of the track, while a projection member 11 which is integral with the bottom of the trolley 8 extends downwards. The projection member 11 is adapted to abut against one or other of two end stops 15 and 16 which are threadably mounted on a stationary screw spindle 14 which extends through a hole 11a on the projection member 11. The two ends of the screw spindle 14 are held immovably by stationary members 14a and 14b attached to the rails 6.

The stops 15 and 16 each comprise a pair of nuts threadably mounted on the screw spindle 14 and an elastic member between the nuts. Thus, the stops 15 and 16 are prevented from undesirable movement from any predetermined position. The elastic member, which would be made of rubber or a similar material, is in the form of an O-ring.

A second cylinder 17 is provided for raising and lowering the rails 6. The bottom end of the cylinder 17 is pivotally connected to a pin 18, while the top end 19 of the cylinder rod is pivotally connected to a joint member 20 which is fixedly secured to the bottom of the rails 6.

A pair of guide plates 21 extend forwardly of the foremost end of the guide plate 1. Each of the guide plates 21 is adjustably fitted by means of bolts 22 so as to allow the distance between them to be selectively pre-determined as required. In the illustrated embodiment a cylinder actuating lever 23 is designed to actuate both the cylinders 12 and 17 by operating it alone. Alternatively, a cylinder actuating lever may be provided for each of the cylinders.

The operation of the apparatus of the invention described above will now be described in the case where the apparatus is used in the disassembly of a length of track.

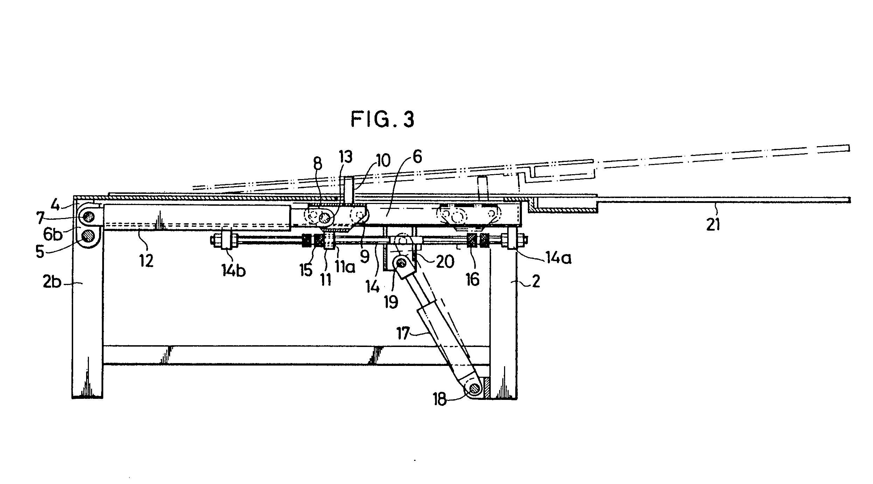

As shown in Figure 5, a length of track 30 is placed on the guide table 1 and the engagement rod 10 on the trolley 8 is brought in engagement with a bushing 31 in the track 30. The cylinder 17 is actuated by operating the lever 23, and the rails 6 are caused to tilt upwards together with the guide table 1 to the position shown in phantom lines in Figure 3. Thus, the bushing 31 in the track 30 is located away from the upper end of the jaw insert 24 without any engagement between the track 30 and the jaw insert.

Next, the cylinder 12 is actuated by operating the lever 23 so that the trolley 8 is moved forwards, moving the bushing 31 in front of it. Thus, the track 30 is displaced by a distance equal to one pitch (see Figure 5) which is determined by the spacing between the stops 15 and 16. As is apparent from the drawings, a cylinder stroke P, which represents the distance of forward displacement as mentioned above is made equal to a pitch between adjacent links, that is, a distance between V-shaped grooves 25a and 25b on the jaw insert 24. Dimensioning in this way is achieved by adjusting the distance between the two stops 15 and 16.

Since each of the stops 15 and 16 is a combination of two nuts with a rubber ring in between them, it can be easily rotated with an operator's hand without any necessity for a tool such as wrench or the like.

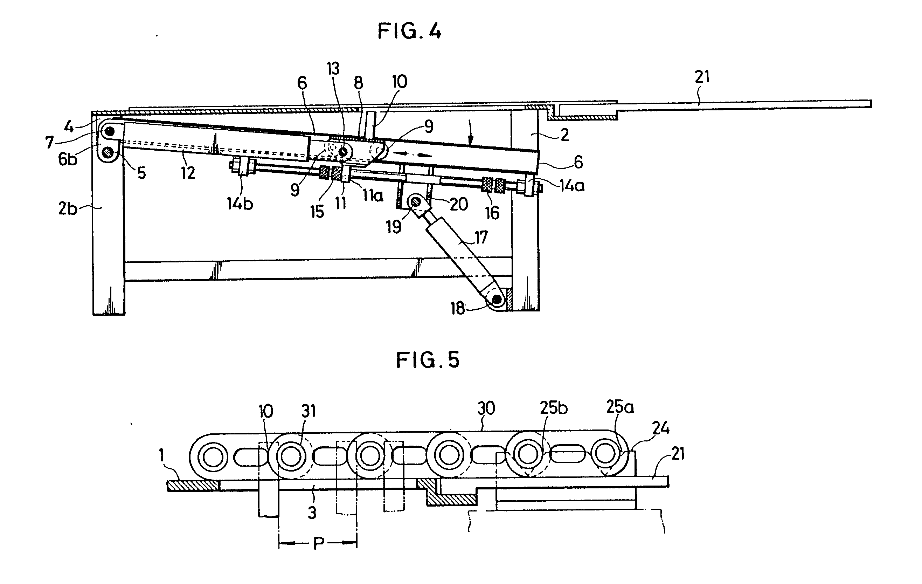

The rails 6 are then lowered together with the guide table 1 by retracting the cylinder 17 until the guide table 1 assumes the position where it is supported on the frame 2. After the rails 6 are lowered to the position shown in Figure 4 where the engagement rod 10 is disengaged from the bushing, the cylinder 12 is retracted to the original position and the cylinder 17 is then actuated again to raise the nails 6. After these operations, the links of the track 30 on the jaw insert 24 is disassembled by operating the track presses B and B'.

On the other hand, when a length of track is to be assembled or reassembled, the engagement rod 10 is brought into engagement with the other side of the bushing 31 so that engaged in Figure 5 and the cylinders 12 and 17 are actuated in reverse.

As stated above, a feed pitch which is exactly equal to the distance between adjacent links can be easily achieved as required by adjustably rotating both the stops 15 and 16. When a line of track chain is disassembled/assembled or reassembled, the position where operation is initiated can be changed as required within the extent of length of the slot 3 by rotating both of the stops. Thus, the apparatus of the invention can be employed for many if not all types of tracks or chains by changing the start point of operation in dependence upon a distance as measured to the track presses and a pitch between adjacent links of the track. Accordingly, a disassembling/ assembling and/or reassembling operation for a length of track can be performed safely and at a high operational efficiency.

## Claims

1. Apparatus for displacing a length of track or chain by a predetermined distance in its longitudinal direction which comprises a guide table (1) having a slot (3) in its surface extending in the longitudinal direction, the guide table (1) being pivotally connected at its rear end to a stationary frame structure (2) about a substantially horizontal axis so as to allow the guide table (1) to tilt upwards; a pair of parallel rails (6) extending in the longitudinal direction below the guide table (1), their rear ends being pivotally connected relative to the guide table (1); a first actuator (17) arranged to swing the rails (6) upwards and downwards; a trolley (8) arranged to run along the rails (6), the trolley (8) being provided with an engagement rod (10) extending upwards from the trolley (8) through the slot (3) in the guide table (1) to come in engagement with a bushing in a track chain on the guide table (1), and a second actuator (12) arranged to move the trolley (8) along the rails (6) characterised in that the trolley (8) includes an abutment member (11) extending beneath the trolley (8) and being arranged to abut against either of two stops (15, 16) which are adjustably mounted on a displacement setting member (14) extending below the rails (6), the extent of movement of the trolley (8) being determined by the positions of the stops (15, 16) whereby the position at which displacement of the track is initiated and the distance of displacement may be preset as required by adjusting the positions of the stops (15, 16) on the setting member (14) and further characterised in that the upward tilting movement of the guide table (1) is achieved by the action of the first actuator (17) on the rails (6).

2. Apparatus as claimed in Claim 1 characterised in that the setting member is a threaded spindle (14), stationary with respect to the rails (6), on which the stops (15, 16) are mounted by way of correspondingly tapped holes.

3. Apparatus as claimed in Claim 1 characterised in that each stop (15, 16) comprises a pair of nuts with an elastic member located between them.

4. Apparatus as claimed in Claim 3 characterised in that each elastic member is made of rubber and is in the form of an O-ring.

5. Apparatus as claimed in any preceding claim characterised in that each rail (6) has a U-shaped section in which rollers (9) which are rotatably carried on the trolley (8) are located.

6. Apparatus as claimed in any preceding claim characterised in that the two actuators (12, 17) comprise pneumatically or hydraulically operated cylinders.

7. Apparatus as claimed in any preceding claim characterised in that the top end of the first actuator (17) is pivotally connected to the rails (6) and the bottom end of the first actuator (17) is pivotally connected to the frame structure (2).

8. Apparatus as claimed in any preceding claim characterised in that the foremost end of the second actuator (12) is operatively connected to the trolley (8) and the rearmost end of the second actuator is connected to the rails (6).

## Patentansprüche

1. Gerät zum Positionieren eines Gleisketten-Teilstücks um eine vorgegebene Strecke in Längsrichtung, welches enthält: einen Führungstisch (1), der in seiner Oberfläche einen sich in Längsrichtung erstreckenden Schlitz (3) hat, wobei der Führungstisch (1) an seinem rückwärtigen Ende um eine im wesentlichen horizontale Achse schwenkbar mit einem stationären Rahmen (2) verbunden ist, um zu ermöglichen, daß der Führungstisch (1) nach oben schräggestellt wird; ein Paar paralleler Schienen (6), die sich in Längsrichtung unter dem Führungstisch (1) erstrecken, wobei ihre rückwärtigen Enden bezüglich des Führungstisches (1) schwenkbar befestigt sind; ein erstes Betätigungselement (17), das so angeordnet ist, daß es die Schienen (6) nach oben und unten schwenken kann; ein Wagen (8), der so angeordnet ist, daß er sich entlang der Schienen (6) bewegt, wobei der Wagen (8) eine Eingriffstange (10), die sich von dem Wagen (8) aus durch den Schlitz (3) im Führungstisch (1) nach oben erstreckt, um mit einer Buchse in einer Gleiskette auf dem Führungstisch (1) in Eingriff zu kommen, aufweist und eine zweites Betätigungselement (12), das angeordnet ist, um den Wagen (8) entlang der Schienen (6) zu bewegen, dadurch gekennzeichnet, daß der Wagen (8) ein Anschlagelement (11) aufweist, das sich unterhalb des Wagens (8) erstreckt und so angeordnet ist, daß es jeweils an einen der Anschläge (15, 16) anstößt, welche einstellbar auf einem sich über den Schienen (6) erstreckenden Positionseinstellelement (14) angeordnet sind, wobei das Ausmaß der Bewegung des Wagens (8) durch die Stellung der Anschläge (15, 16) bestimmt wird, wodurch die Stelle, an der die Positionierung der Gleiskette initiiert wird, und die Entfernung der Verschiebung dadurch nach Bedarf vorgegeben werden kann, daß die Positionen der Anschläge (15, 16) auf dem Einstellelement (14) eingestellt werden, und weiterhin dadurch gekennzeichnet, daß die Aufwärtskippbewegung des Führungstischs (1) durch die Wirkung des ersten Betätigungselements (18) auf die Schienen (6) erreicht wird.

2. Gerät nach Anspruch 1, dadurch gekennzeichnet, daß das Einstellelement eine Gewindespindel (14) ist, die bezüglich der Schienen (6) stationär ist, auf welcher die Anschläge (15, 16) mittels entsprechender Bohrungen mit Innengewinde befestigt sind.

3. Gerät nach Anspruch 1, dadurch gekennzeichnet, daß jeder Anschlag (15, 16) ein Paar Muttern mit einem dazwischen befindlichen elastischen Element aufweist.

4. Gerät nach Anspruch 3, dadurch gekennzeichnet, daß jedes elastische Element aus Gummi ist und die Form eines O-Rings hat.

5. Gerät nach einem der vorhergehenden Ansprüche, dadurch gekennzeichnet, daß jede Schiene (6) einen U-förmigen Querschnitt aufweist, in dem Walzen (9) angeordnet sind, die in drehender Weise auf dem Wagen (8) getragen sind.

6. Gerät nach einem der vorhergehenden Ansprüche, dadurch gekennzeichnet, daß die beiden Betätigungselemente (12, 17) pneumatisch oder hydraulisch betriebene Zylinder aufweisen.

7. Gerät nach einem der vorhergehenden Ansprüche, dadurch gekennzeichnet, daß das obere Ende des ersten Betätigungselements (17) schwenkbar mit den Schienen (6) verbunden ist und daß das untere Ende des ersten Betätigungselements (17) schwenkbar mit dem Rahmen (2) verbunden ist.

8. Gerät nach einem der vorhergehenden Ansprüche, dadurch gekennzeichnet, daß das vorderste Ende des zweiten Betätigungselements (12) funktionell mit dem Wagen (8) und das hintere Ende des zweiten Betätigungselements (12) mit den Schienen (6) verbunden ist.

**Revendications**

1. Appareil pour déplacer une section de chenille ou de chaîne sur une distance prédéterminée dans sa direction longitudinale, qui comprend une table de guidage (1) comportant une fente (3) dans sa surface s'étendant en direction longitudinale, la table de guidage (1) étant reliée de façon pivotante par son extrémité arrière à une structure de support fixe (2) autour d'un axe sensiblement horizontal de manière à permettre à la table de guidage (1) de basculer vers le haut; deux rails parallèles (6) s'étendant dans la direction longitudinale au-dessous de la table de guidage (1), leurs extrémités arrière étant reliées de façon pivotante à la table de guidage (1), un premier dispositif d'actionnement (17) aménagé pour faire osciller les rails vers le haut et vers le bas; un chariot (8) aménagé pour circuler le long des rails (6), le chariot (8) étant muni d'une tige d'engagement (10) s'étendant vers le haut à partir du chariot (8) et passant par la fente (3) de la table de guidage (1) pour venir s'engager dans une douille d'une chaîne à chenille sur la table de guidage (1), et un second dispositif d'actionnement (12) aménagé pour déplacer le chariot (8) le long des rails (6), caractérisé en ce que le chariot (8) comprend un organe de butée (11) s'étendant au-dessous du chariot (8) et disposé pour venir buter contre l'une de deux butées (15, 16) montées de façon réglable sur un organe de réglage par déplacement (14) s'étendant au-dessous des rails (6), l'étendue du mouvement du chariot (8) étant déterminée par les positions des butées (15, 16), la position à laquelle le déplacement de la section est initié et la distance de déplacement pouvant être ainsi préétablies selon les besoins en ajustant les positions des butées (15, 16) sur l'organe de réglage (14), et caractérisé en outre en ce que le mouvement de basculement vers le haut de la table de guidage (1) est obtenu par l'action du premier dispositif d'actionnement (17) sur les rails (6).

2. Appareil selon la revendication 1, caractérisé en ce que l'organe de réglage est une broche filetée (14), fixe par rapport aux rails (6), sur laquelle les butées (15, 16) sont montées au moyen de trous taraudés correspondants.

3. Appareil selon la revendication 1, caractérisé en ce que chaque butée (15, 16) comprend deux écrous et un élément élastique disposé entre eux.

4. Appareil selon la revendication 3, caractérisé en ce que chaque élément élastique est réalisé en caoutchouc et se présente sous la forme d'un joint torique.

5. Appareil selon l'une quelconque des revendications précédentes, caractérisé en ce que chaque rail (6) a une section en forme de U dans laquelle sont disposés des galets (9) supportés de façon rotative par le chariot (8).

6. Appareil selon l'une quelconque des revendications précédentes, caractérisé en ce que les deux dispositif d'actionnement (16, 17) sont constitués par des vérins à commande pneumatique ou hydraulique.

7. Appareil selon l'une quelconque des revendications précédentes, caractérisé en ce que l'extrémité supérieure du premier dispositif d'actionnement (17) est reliée de façon pivotante aux rails (6) et l'extrémité inférieure du premier dispositif d'actionnement (17) est reliée de façon pivotante à la structure du bâti (2).

8. Appareil selon l'une quelconque des revendications précédentes, caractérisé en ce que l'extrémité le plus en avant du second dispositif d'actionnement (12) est reliée opérationnellement au chariot (8) et l'extrémité le plus à l'arrière du second dispositif d'actionnement est reliée aux rails (6).

FIG.1

FIG. 2

FIG. 3

FIG. 4

FIG. 5